# EUROPÄISCHE PATENTSCHRIFT

(11) **EP 2 450 854 B1**
(45) Veröffentlichungstag und Bekanntmachung des Hinweises auf die Patenterteilung: **01.05.2019**
(21) Anmeldenummer: 11008631.1
(22) Anmeldetag: 27.10.2011
(51) Int. Cl.: G07C 9/00, E05B 47/00, E05B 17/00

(54) **BARRIEREFREIE ZUGANGSEINRICHTUNG FÜR BEHINDERTE PERSONEN**
BARRIER-FREE ACCESS DEVICE FOR DISABLED PERSONS
DISPOSITIF D'ACCÈS SANS BARRIÈRE POUR PERSONNES HANDICAPÉES

(30) Priorität: 05.11.2010 DE 102010060389
(43) Veröffentlichungstag der Anmeldung: 09.05.2012
(73) Patentinhaber: dormakaba Deutschland GmbH, 58256 Ennepetal (DE)
(72) Erfinder: Speckamp, Hans-Rainer, 58339 Breckerfeld (DE)
(74) Vertreter: Balder IP Law, S.L.

(56) Entgegenhaltungen:
- GB-A- 2 430 298
- JP-A- H1 096 375
- KR-A- 20040 093 937

## Beschreibung

Die vorliegende Erfindung betrifft eine barrierefreie Zugangseinrichtung für behinderte Personen, wobei die Zugangseinrichtung zum Zugang für Räumlichkeiten mit einer Türeinrichtung bestimmt ist, welche Türeinrichtung mit der Zugangseinrichtung bedienbar ist.

Barrierefreie Zugangseinrichtungen für behinderte Personen weisen eine modifizierte Ausführung auf, beispielsweise sind Bedienelemente wie Türdrücker oder Schließzylinder in einer geringeren Höhe angebracht, um beispielsweise Rollstuhlfahrern eine bessere Bedienbarkeit der Türeinrichtung zu ermöglichen. Öffentliche Gebäude oder Gebäude, die von einer großen Anzahl von Personen genutzt werden, besitzen häufig behindertengerechte Nebeneingänge, oder es sind Eingangsbereiche vorgesehen, die seitlich von Karusselldrehtüren erforderlich sind und als gewöhnliche Drehflügeltüren ausgebildet sind. Der Weg zu behindertengerechten Türeinrichtungen ist zumeist rollstuhlgerecht ausgeführt, und sämtliche Bedienelemente, die beispielsweise Klingelschalter, Kartenleser, Gegensprechanlagen und dergleichen betreffen, sind auf die Bedienhöhe von Rollstuhlfahrern ausgelegt.

Elektrisch wirkende Zugangseinrichtungen können Türbetätiger aufweisen, und bei Druck auf einen Schalter, beim Einführen einer ID-Karte in ein Lesegerät oder bei einem betätigten Türöffner, beispielsweise durch eine Person im Empfang in einem Gebäude, können die Drehflügel von Türen selbsttätig öffnen. Tastschalter, die von behinderten Personen betätigt werden können, sind ebenfalls auf einer Höhe angebracht, in der diese von einem Rollstuhlfahrer ebenfalls bequem bedient werden können. Die Tastschalter weisen häufig großflächige Druckelemente auf, gegen die mit der Hand, mit einem Ellenbogen, mit einem Knie oder dergleichen ein Druck ausgeübt werden kann. Damit kann die elektrisch wirkende Türbetätigung aktiviert werden, und beispielsweise eine Drehflügeltür kann selbsttätig öffnen.

Des Weiteren sind Zugangseinrichtungen aus den Dokumenten JP H10 96375 A, KR 2004 0093937 A und GB 2 430 298 A bekannt.

Nachteilhafterweise bilden bekannte Zugangseinrichtungen nicht für jede Form von körperlichen Behinderungen einen barrierefreien Zugang. Abhängig von der Form und dem Grad der körperlichen Behinderung ist es daher wünschenswert, barrierefreie Zugangseinrichtungen derart weiterzubilden, dass die Zugangseinrichtung verschiedenster Arten von körperlicher Behinderung gerecht wird.

Es ist daher die Aufgabe der vorliegenden Erfindung, eine Zugangseinrichtung zum Zugang für Räumlichkeiten mit einer Türeinrichtung für behinderte Personen zu schaffen, die eine Barrierefreiheit für verschiedenste Formen von Behinderungen bietet.

Diese Aufgabe wird ausgehend von einer barrierefreien Zugangseinrichtung für behinderte Personen gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass die Zugangseinrichtung als elektrisch wirkende Zugangseinrichtung ausgeführt ist, und Informationsmittel zur Information an sehbehinderte Personen aufweist.

Erfindungsgemäß wird eine barrierefreie Zugangseinrichtung für sehbehinderte Personen geschaffen, wobei die Zugangseinrichtung als elektrisch wirkende Zugangseinrichtung ausgeführt ist. Die Informationsmittel zur Information an sehbehinderte Personen können Bedienelemente umfassen, die wenigstens teilweise zum Öffnen der Türeinrichtung dienen können.

Außerdem weisen die Informationsmittel eine Blindenschrift und wenigstens eine grobe und wenigstens eine feine Tasthilfe auf. Nähert sich eine sehbehinderte Person der Zugangseinrichtung, können die Tasthilfen so angebracht sein, dass die Person zunächst über die grobe Tasthilfe das Vorhandensein der Zugangseinrichtung ertasten kann, wobei nach erfolgreichem Ertasten der groben Tasthilfe wenigstens eine feine Tasthilfe folgen kann. Eine Blindenschrift kann schlussendlich auf konkreten Bedienelementen angebracht sein, so dass eine kaskadenförmige Informationskette gebildet ist, die mit einer groben Tasthilfe beginnt, über eine feine Tasthilfe die sehbehinderte Person weiterführt und schließlich zu einer Blindenschrift führt, um ein konkretes Bedienelement der Zugangseinrichtung zuordnen zu können.

Die Zugangseinrichtung kann zumindest ein Bedienelement aufweisen. wobei insbesondere die Blindenschrift und/oder die feine Tasthilfe zum Auffinden und/oder zur Unterstützung der Bedienung zumindest eines der Bedienelemente ausgeführt ist. Die grobe Tasthilfe kann folglich derart angeordnet sein, dass sich eine sehbehinderte Person mit Ertasten der groben Tasthilfe der Zugangseinrichtung, insbesondere durch taktile und/oder habtische Informationsaufnahme annähern kann. Die feine Tasthilfe kann folglich derart angeordnet sein, dass diese durch eine sehbehinderte Person nach Ertasten der groben Tasthilfe auffindbar ist. Die Tasthilfen selbst umfassen eine Blindenschrift, so dass die Blindenschrift die Funktion eines Wegweisers erfüllt, der auf der groben Tasthilfe aufgebracht ist.

Die Bedienelemente können wenigstens eine Blindenschrift und/oder eine feine Tasthilfe aufweisen, welche vorzugsweise als integraler Bestandteil und/oder vorzugsweise als austauschbares Element des Bedienelementes ausgeführt ist. Wenigstens eines der Bedienelemente kann einen Türbetätigungstaster und/oder eine Kartenleseeinheit und/oder eine Gegensprechanlage umfassen. Auf einem Türbetätigungstaster kann sich beispielsweise eine Blindenschrift befinden, wobei die grobe Tasthilfe benachbart zum Türbetätigungstaster angeordnet sein kann. Die Blindenschrift kann beispielsweise einen Namen umfassen, um eine Tastenbeschilderung für sehbehinderte Personen zu schaffen. Eine Kartenleseeinheit kann beispielsweise eine feine Tasthilfe umfassen, so dass die feine Tasthilfe eine sehbehinderte Person beispielsweise auf die Anordnung einer Karteneinschuböffnung hinweist. Benachbart zur feinen Tasthilfe kann eine Blindenschrift angeordnet sein, die die Information beinhaltet, dass das Bedienelement als Kartenleseeinheit ausgeführt ist. Entsprechend kann eine Gegensprechanlage mit einer feinen Tasthilfe ausgeführt sein, um beispielsweise auf einen Druckknopf hinzuweisen, und ferner kann eine Blindenschrift auf der Gegensprechanlage vorgesehen sein, die beispielsweise Hinweise zur Bedienung der Gegensprechanlage beinhaltet. Jedes der Bedienelemente kann zunächst einer groben Tasthilfe zugeordnet sein, die derart ausgeführt ist, dass die grobe Tasthilfe durch eine sehbehinderte Person als solche wahrgenommen wird. Hierzu kann die grobe Tasthilfe wiederum eine Blindenschrift aufweisen, und die grobe Tasthilfe kann eine taktil erkennbare Verzweigung bilden, um die sehbehinderte Person zum Türbetätigungstaster, zur Kartenleseeinheit oder zur Gegensprechanlage zu begleiten.

Die Räumlichkeit, der die erfindungsgemäße Zugangseinrichtung zugeordnet ist, kann beispielsweise ein öffentliches Gebäude, ein öffentliche genutzter Raum, ein Krankenhaus, eine Rehabilitationseinrichtung und/ oder eine Behindertenstätte sein. Insbesondere derartige Einrichtungen werden häufig von sehbehinderten Personen frequentiert, und die vorliegende Erfindung richtet sich insbesondere an sehbehinderte Personen, die sich in der Umgebung der barrierefreien Zugangseinrichtung nicht auskennen. Die Informationsmittel zur Information an die sehbehinderten Personen können beispielsweise an der Türeinrichtung selbst angebracht sein, wobei die Informationsmittel beispielsweise im Türblatt, im Türrahmen oder angrenzend im Mauerwerk eingelassen sein können.

Nach einer vorteilhaften Ausführungsform kann die barrierefreie Zugangseinrichtung ein Bedienelement aufweisen, das in einer Bediensäule aufgenommen ist, die vorzugsweise angrenzend an die Türeinrichtung angeordnet ist. Bediensäulen sind häufig als frei stehende aus Edelstahl ausgeführte Säulen ausgebildet, und können neben den Bedienelementen wie einen Türbetätigungstaster, eine Kartenleseeinheit und/oder eine Gegensprechanlage ferner einen oder mehrere Briefkästen umfassen, und finden häufig Verwendung vor Bürogebäuden oder öffentlichen Einrichtungen. Freistehende Bediensäulen sind für sehbehinderte Personen besonders schwer aufzufinden, und es können weitere Bedienelemente vorgesehen sein, die die sehbehinderte Person zur Bediensäule führt. Diese weiteren Bedienelemente können beispielsweise ein Handlauf mit eingebrachter Blindenschrift oder ein Geländer umfassen, in das ebenfalls eine Blindenschrift eingebracht sein kann. Die Blindenschrift kann dabei auf die Bediensäule hinweisen.

Ist das wenigstens eine Bedienelement in und/oder an einer Wand eines Gebäudes vorzugsweise angrenzend an die Türeinrichtung und/oder in der Türeinrichtung selbst angeordnet, kann auf gleiche Weise eine kaskadenförmige Anordnung von groben Tasthilfen, feinen Tasthilfen und Blindenschriften vorgesehen sein, wobei eine weitere Tasthilfe dazu dienen kann, auf die Anordnung der Türeinrichtung, die durch Bedienung wenigstens eines Bedienelementes betätigt werden kann, hinzuweisen.

Im Ergebnis wird eine Zugangseinrichtung für sehbehinderte Personen gebildet, die barrierefrei ausgeführt ist und mit einer vorteilhaften Anordnung von groben und feinen Tasthilfen sowie der Anordnung wenigstens einer Blindenschrift für die sehbehinderte Person eine kaskadenförmige Informationskette bildet, durch die eine sehbehinderte Person von der Auffindung wenigstens eines Bedienelementes bis zum Passieren der Türeinrichtung auch ohne vorherige Kenntnis der örtlichen Begebenheiten eine leichte Bedienung der Zugangseinrichtung ermöglicht.

Die Zugangseinrichtung kann, gemessen von der Ebene des Fußbodens, in unterschiedlichen Höhen angeordnet sein, wie beispielsweise im Bereich von 1,05m oder 0,85m.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine schematische Ansicht einer barrierefreien Zugangseinrichtung für behinderte Personen mit Bedienelementen, die in einer Bediensäule aufgenommen sind und
- Figur 2: eine Vorderansicht und eine Seitenansicht der Bediensäule mit Bedienelementen, die erfindungsgemäße Informationsmittel für sehbehinderte Personen aufweisen.

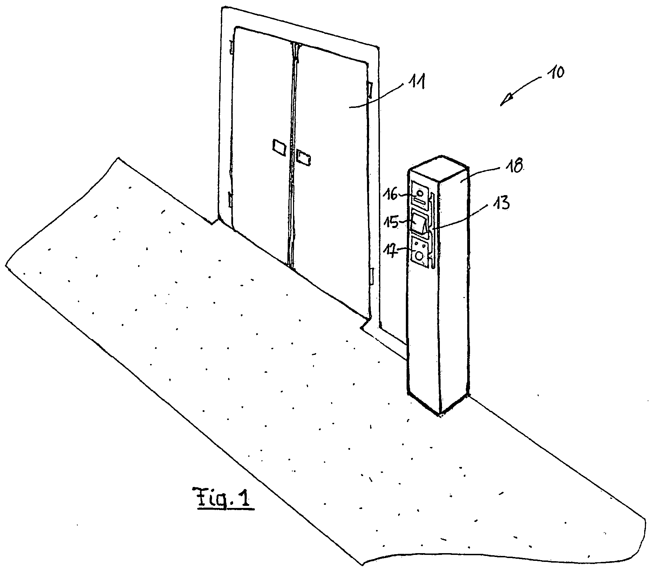

Figur 1 zeigt in einer perspektivischen Ansicht ein Ausführungsbeispiel einer barrierefreien Zugangseinrichtung 10 für behinderte Personen. Die Zugangseinrichtung 10 dient zum Zugang für Räumlichkeiten, die mit einer Türeinrichtung 11 versehen sind, wobei die Türeinrichtung 11 mit der Zugangseinrichtung 10 bedienbar ist. Die Zugangseinrichtung 10 weist eine Bediensäule 18 auf, die freistehend im Boden eingelassen ist. In der Bediensäule 18 sind mehrere Bedienelemente 15, 16 und 17 aufgenommen. Das Bedienelement 15 ist als Türbetätigungstaster ausgebildet, das Bedienelement 16 bildet eine Kartenleseeinheit und das Bedienelement 17 bildet eine Gegensprechanlage. Die barrierefreie Zugangseinrichtung 10 ist erfindungsgemäß als elektrisch wirkende Zugangseinrichtung 10 ausgeführt, das heißt, das elektrisch wirkende Bedienelemente 15, 16 und/ oder 17 bedient werden müssen, um die Tür der Türeinrichtung 11 zu öffnen. Beispielsweise kann das Bedienelement 15 in Form des Türbetätigungstasters gedrückt werden, das Bedienelement 16 in Form der Kartenleseeinheit 16 kann dazu genutzt werden, eine ID-Karte einzuführen, mit der sich die sehbehinderte Person authentifiziert. Mit der Gegensprechanlage 17 als weiteres Bedienelement kann die sehbehinderte Person mit einer Person kommunizieren, die beispielsweise in dem Gebäude, das durch die Türeinrichtung 11 begehbar ist, zum Öffnen der Tür zuständig ist und von der Innenseite des Gebäudes eine elektrische Aktivierung der Türeinrichtung 11 auslösen kann.

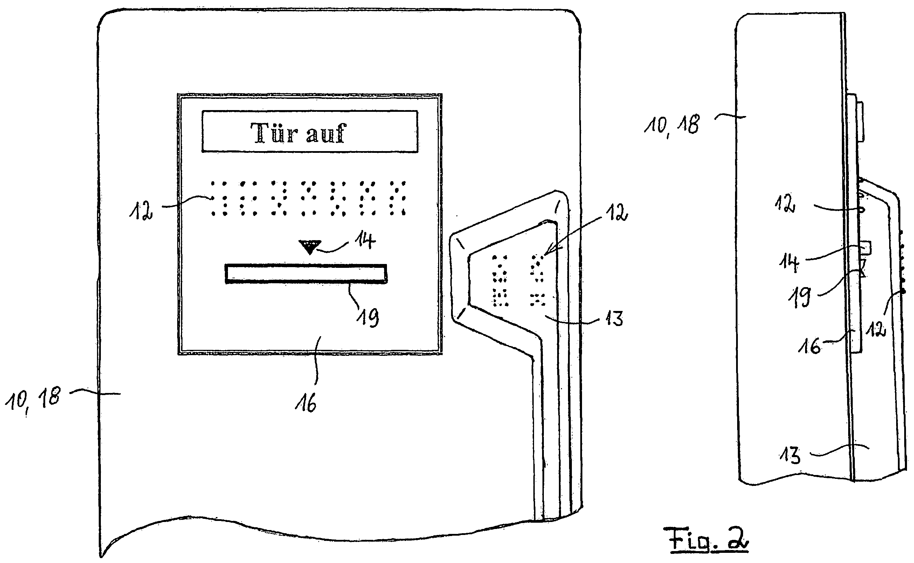

Erfindungsgemäß weist die Zugangseinrichtung 10 Informationsmittel 12, 13 und/oder 14 auf, die zur Information an sehbehinderte Personen dienen. Das Informationsmittel 13 ist in Form einer groben Tasthilfe ausgeführt, und ist angrenzend an die Bedienelemente 15, 16 und 17 angeordnet. Die grobe Tasthilfe 13 kann von einer sehbehinderten Person ertastet werden, und die grobe Tasthilfe 13 weist Hinweisanformungen auf, die auf die jeweilige Anordnung der Bedienelemente 15, 16 und 17 hinweist. Ferner kann die grobe Tasthilfe 13 eine Blindenschrift umfassen, wie in der folgenden Figur 2 gezeigt.

Figur 2 zeigt die Zugangseinrichtung 10 in Form einer Bediensäule 18. Die Bediensäule 18 ist sowohl vorderseitig als auch seitlich in einem Abschnitt gezeigt, in dem sich ein Bedienelement 16 in Form der Kartenleseeinheit 16 befindet. Die Kartenleseeinheit 16 besitzt eine Karteneinschuböffnung 19, in die eine ID-Karte eingeschoben werden kann. Als feine Tasthilfe 14 dient eine dreieckförmige Erhebung in der Kartenleseeinheit 16, die mittig über der Karteneinschuböffnung 19 angeordnet ist und eine sehbehinderte Person darauf hinweist, dass die ertastbare Karteneinschuböffnung 19 tatsächlich zum Einschub einer ID-Karte dient. Oberhalb der feinen Tasthilfe 14 ist eine Blindenschrift 12 gezeigt, die die Information beinhalten kann, dass es sich um eine Kartenleseeinheit handelt, und/oder zu welcher Einrichtung ein Zugang gewährt werden kann, wenn eine entsprechend zugeordnete ID-Karte in die Karteneinschuböffnung 19 eingeführt wird.

Seitlich der Kartenleseeinheit 16 ist eine grobe Tasthiffe 13 gezeigt. Die grobe Tasthilfe 13 kann auf dem Körper der Bediensäule 18 aufgesetzt sein und dient einer sehbehinderten Person als Tasthilfe, um die Kartenleseeinheit 16 aufzufinden. Oberseitig auf der groben Tasthilfe 13 ist wiederum beispielhaft eine Blindenschrift 12 eingebracht, die auf die benachbart angeordnete Kartenleseeinheit 16 hinweist. Die grobe Tasthilfe 13 kann sich auch seitlich der in der vorliegenden Figur nicht weiter gezeigten Türbetätigungstaster 15 und der Gegensprechanlage 17 erstrecken, wobei auf der jeweiligen Höhe der Bedieneinheiten 15 und 17 weitere Blindenschriften 12 in die grobe Tasthilfe 13 eingebracht sein können, die auf das jeweilige Bedienelement 15 und 17 hinweist (vgl. Figur 1).

Das gezeigte Ausführungsbeispiel einer Zugangseinrichtung 10 in Gestalt einer Bediensäule 18 kann auch im Mauerwerk eines Gebäudes, vorzugsweise benachbart zur Türeinrichtung 11, eingebracht sein. Ferner kann die Zugangseinrichtung 10 in der Türeinrichtung selbst eingebracht sein, wobei die dargestellten Informationsmittel 12, 13 und 14 beliebig angepasst werden können. Erfindungsgemäß sollen die Informationsmittel 12, 13 und 14 eine taktile Hilfe darstellen, um sehbehinderten Personen die Bedienung einer Zugangseinrichtung 10 zu erleichtern und diese barrierefrei auszuführen. Ist die Blindenschrift 12 im Bedienelement 15, 16 und/oder 17 eingebracht, können die Bedienelemente 15, 16 und/oder 17 austauschbare Blendrahmen umfassen, in denen die Blindenschrift 12 eingebracht ist. Damit kann auf einfache Weise mit einem Austausch des Blendrahmens zugleich die Blindenschrift 12 ausgetauscht werden.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht, sofern diese den durch die anhängigen Ansprüche definierten Schutzumfang nicht verlassen. Die Erfindung richtet sich auf elektrisch wirkende Zugangseinrichtungen 10, deren Bedienung grundsätzlich aufwändiger ausgestaltet ist, als ausschließlich mechanisch wirkende Zugangseinrichtungen. Einer sehbehinderten Person sind Griffelemente bekannt, um eine Türeinrichtung zu bedienen. Jedoch wird die Bedienung einer Zugangseinrichtung 10 für sehbehinderte Personen erschwert, wenn diese als elektrisch wirkende Zugangseinrichtung 10 ausgeführt ist, da die Bedienelemente 15, 16 und/oder 17 zur Bedienung der Türeinrichtung 11 häufig räumlich getrennt zur Türeinrichtung 11 angeordnet sind.

### Bezugszeichenliste

- 10: Zugangseinrichtung
- 11: Türeinrichtung
- 12: Informationsmittel, Blindenschrift
- 13: Informationsmittel, Tasthilfe grob
- 14: Informationsmittel, Tasthilfe fein
- 15: Bedieneinheit, Türbetätigungstaster
- 16: Bedieneinheit, Kartenleseeinheit
- 17: Bedieneinheit, Gegensprechanlage
- 18: Bediensäule
- 19: Karteneinschuböffnung

## Patentansprüche

1. Barrierefreie Zugangseinrichtung (10) für behinderte Personen, wobei die Zugangseinrichtung (10) zum Zugang für Räumlichkeiten mit einer Türeinrichtung (11) bestimmt ist, welche Türeinrichtung (11) mit der Zugangseinrichtung (10) bedienbar ist, wobei die Zugangseinrichtung (10) als elektrisch wirkende Zugangseinrichtung (10) ausgeführt ist, und Informationsmittel (12, 13, 14) zur Information an sehbehinderte Personen aufweist, wobei die Informationsmittel (12, 13, 14) eine Blindenschrift (12) aufweisen, **dadurch gekennzeichnet, dass** die Informationsmittel (12, 13, 14) wenigstes eine grobe (13) und wenigstens eine feine Tasthilfe (14) aufweisen, wobei die feine Tasthilfe (14) derart angeordnet ist, dass diese durch eine sehbehinderte Person nach Ertasten der groben Tasthilfe (13) auffindbar ist.

2. Barrierefreie Zugangseinrichtung (10) nach Anspruch 1, **dadurch gekennzeichnet, dass** die Zugangseinrichtung (10) zumindest ein Bedienelement (15, 16, 17) aufweist, wobei insbesondere die Blindenschrift (12) und/oder die feine Tasthilfe (14) zum Auffinden und/oder zur Unterstützung der Bedienung zumindest eines der Bedienelemente (15, 16, 17) ausgeführt sind.

3. Barrierefreie Zugangseinrichtung (10) nach Anspruch 1 oder 2, **dadurch gekennzeichnet, dass** die grobe Tasthilfe (13) derart angeordnet ist, dass sich eine sehbehinderte Person mit Ertasten der groben Tasthilfe (13) der Zugangseinrichtung (10) insbesondere durch taktile und/oder haptische Informationsaufnahme annähern kann.

4. Barrierefreie Zugangseinrichtung (10) nach Anspruch 2, **dadurch gekennzeichnet, dass** die Bedienelemente (15, 16, 17) wenigstens eine Blindenschrift (12) und/oder eine feine Tasthilfe (14) aufweisen, welche vorzugsweise als integraler Bestandteil und/oder vorzugsweise als austauschbares Element ausgeführt ist.

5. Barrierefreie Zugangseinrichtung (10) nach Anspruch 2 oder 4, **dadurch gekennzeichnet, dass** wenigstens eines der Bedienelemente (15, 16, 17) einen Türbetätigungstaster (15) und/oder eine Kartenleseeinheit (16) und/oder eine Gegensprechanlage (17) umfasst.

6. Barrierefreie Zugangseinrichtung (10) nach einem der vorgenannten Ansprüche, **dadurch gekennzeichnet, dass** die Räumlichkeit ein öffentliches Gebäude, ein öffentlich genutzter Raum, ein Krankenhaus, eine Rehabilitationseinrichtung und/oder eine Behindertenstätte ist.

7. Barrierefreie Zugangseinrichtung (10) nach einem der Ansprüche 2, 4 oder 5, **dadurch gekennzeichnet, dass** das wenigstens eine Bedienelement (15, 16, 17) in einer Bediensäule (18) aufgenommen ist, die vorzugsweise angrenzend an die Türeinrichtung (11) angeordnet ist.

8. Barrierefreie Zugangseinrichtung (10) nach einem der Ansprüche 2, 4, 5 oder 7, **dadurch gekennzeichnet, dass** das wenigstens eine Bedienelement (15, 16, 17) in und/oder an einer Wand eines Gebäudes vorzugsweise angrenzend an die Türeinrichtung (11) und/oder in der Türeinrichtung (11) selbst angeordnet ist.

9. Barrierefreie Zugangseinrichtung (10) nach einem der vorgenannten Ansprüche, **dadurch gekennzeichnet, dass** die Zugangseinrichtung (10) im montierten Zustand in unterschiedlichen Höhen gemessen von der Ebene des Fußbodens angeordnet ist.

10. Barrierefreie Zugangseinrichtung (10) nach Anspruch 9, **dadurch gekennzeichnet, dass** die Höhe der Anordnung der Zugangseinrichtung (10) im montierten Zustand gemessen von der Ebene des Fußbodens zwischen 0,80m und 1,10m angeordnet ist.

11. Barrierefreie Zugangseinrichtung (10) nach Anspruch 10, **dadurch gekennzeichnet, dass** die Höhe der Anordnung der Zugangseinrichtung (10) im montierten Zustand gemessen von der Ebene des Fußbodens bei 1,05m angeordnet ist.

12. Barrierefreie Zugangseinrichtung (10) nach Anspruch 10, **dadurch gekennzeichnet, dass** die Höhe der Anordnung der Zugangseinrichtung (10) im montierten Zustand gemessen von der Ebene des Fußbodens bei 0,85m angeordnet ist.

## Claims

1. A barrier-free access device (10) for handicapped individuals, wherein the access device (10) is intended for the access to premises with a door device (11), which door device (11) is operable with the access device (10), wherein the access device (10) is embodied as electrically functioning access device (10), and includes information means (12, 13, 14) for informing visually impaired individuals, wherein the information means (12, 13, 14) include tactile printing (12), **characterized in that** the information means (12, 13, 14) include at least one coarse (13) and at least one fine tactile aid (14), wherein the fine tactile aid (14) is disposed such that the latter may be found by the visually impaired individual after having detected the coarse tactile aid (13).

2. The barrier-free access device (10) according to claim 1, **characterized in that** the access device (10) includes at least one operating element (15, 16, 17), wherein in particular are provided the tactile printing (12) and/or the fine tactile aid (14) for finding and/or for assisting in the operation of at least one of the operating elements (15, 16, 17).

3. The barrier-free access device (10) according to claim 1 or 2, **characterized in that** the coarse tactile aid (13) is disposed such that a visually impaired individual may approach the coarse tactile aid (13) of the access device (10) by feeling, in particular by tactile and/or haptic information reception.

4. The barrier-free access device (10) according to claim 2, **characterized in that** the operating elements (15, 16, 17) include at least tactile printing (12) and/or a fine tactile aid (14), which preferably is configured as an integral component and/or as an exchangeable element.

5. The barrier-free access device (10) according to claim 2 or 4, **characterized in that** at least one of the operating elements (15, 16, 17) comprises a door actuator button (15) and/or a card reader unit (16) and/or an intercommunications system (17).

6. The barrier-free access device (10) according to any of the aforementioned claims, **characterized in that** the premises consist of a public building, a publicly used room, a hospital, a rehabilitation institution and/or a handicapped persons centre.

7. The barrier-free access device (10) according to any of the aforementioned claims 2, 4 or 5, **characterized in that** the at least one operating element (15, 16, 17) is accommodated in an operating column (18), which preferably is disposed bordering the door device (11).

8. The barrier-free access device (10) according to any of the aforementioned claims 2, 4, 5 or 7, **characterized in that** the at least one operating element (15, 16,17) is disposed in and/or at a wall of a building, preferably bordering the door device (11) and/or in the proper door device (11).

9. The barrier-free access device (10) according to any of the aforementioned claims, **characterized in that** the access device (10) in the mounted condition is disposed at different heights measured from the plane of the floor.

10. The barrier-free access device (10) according to claim 9, **characterized in that** the height of the arrangement of the access device (10) in the mounted condition is disposed between 0.80 m and 1.10 m measured from the plane of the floor.

11. The barrier-free access device (10) according to claim 10, **characterized in that** the height of the arrangement of the access device (10) in the mounted condition is disposed at 1.05 m measured from the plane of the floor.

12. The barrier-free access device (10) according to claim 10, **characterized in that** the height of the arrangement of the access device (10) in the mounted condition is disposed at 0.85 m measured from the plane of the floor.

## Revendications

1. Dispositif d'accès sans barrière (10) pour des personnes handicapées, le dispositif d'accès (10) étant destiné à pour l'accès aux locaux avec un dispositif de porte (11), lequel dispositif de porte (11) étant opérable avec le dispositif d'accès (10), le dispositif d'accès (10) étant aménagé comme dispositif d'accès (10) fonctionnant électriquement, et comprenant des moyens d'information (12, 13, 14) comme information aux personnes malvoyantes, les moyens d'information (12, 13, 14) comprenant de l'écriture en braille (12), **caractérisé en ce que** les moyens d'information (12, 13, 14) comprennent au moins une assistance tactile grossière (13) et au moins une assistance tactile fine (14), l'assistance tactile fine (14) étant agencée de telle façon qu'une personne malvoyante soit capable de la trouver après avoir palper l'assistance tactile grossière (13).

2. Dispositif d'accès sans barrière (10) selon la revendication 1, **caractérisé en ce que** le dispositif d'accès (10) comprend au moins un élément de commande (15, 16, 17), dans lequel tout particulièrement l'écriture en braille (12) et/ou l'assistance tactile fine (14) sont/est aménagée/s à trouver et/ou à assister dans la commande dudit au moins un élément de commande (15, 16, 17).

3. Dispositif d'accès sans barrière (10) selon la revendication 1 ou 2, **caractérisé en ce que** l'assistance tactile grossière (13) est agencée de telle façon qu'une personne malvoyante en tâtant l'assistance tactile grossière (13) est en mesure d'approcher le dispositif d'accès (10) par réception d'information tactile et/ou haptique.

4. Dispositif d'accès sans barrière (10) selon la revendication 2, **caractérisé en ce que** les éléments de commande (15, 16, 17) comprennent au moins de l'écriture en braille (12) et/ou une assistance tactile fine (14), laquelle est aménagée de préférence comme composant intégral et/ou de préférence comme élément échangeable.

5. Dispositif d'accès sans barrière (10) selon la revendication 2 ou 4, **caractérisé en ce qu'**au moins un des éléments de commande (15, 16, 17) comporte un bouton d'actionnement de porte (15) et/ou une unité lectrice de carte (16) et/ou un système d'interphone (17).

6. Dispositif d'accès sans barrière (10) selon l'une des revendications mentionnées ci-avant, **caractérisé en ce que** les locaux consistent en un bâtiment public, une localité utilisée publiquement, un hôpital, une institution de réhabilitation et/ou un centre pour personnes handicapées.

7. Dispositif d'accès sans barrière (10) selon l'une des revendications 2, 4 ou 5, **caractérisé en ce que** ledit au moins un élément de commande (15, 16, 17) est accommodé dans une colonne de commande (18), laquelle est agencée de préférence juxtaposée au dispositif de porte (11).

8. Dispositif d'accès sans barrière (10) selon l'une des revendications 2, 4, 5 ou 7, **caractérisé en ce que** ledit au moins un élément de commande (15, 16, 17) est agencé dans et/ou sur une paroi d'un bâtiment, de préférence juxtaposée au dispositif de porte (11) et/ou dans le dispositif de porte (11) même.

9. Dispositif d'accès sans barrière (10) selon l'une des revendications mentionnées ci-avant, **caractérisé en ce que** le dispositif d'accès (10) à l'état monté est agencé en différentes hauteurs mesurées à partir du plan du plancher.

10. Dispositif d'accès sans barrière (10) selon la revendication 9, **caractérisé en ce que** la hauteur de l'agencement du dispositif d'accès (10) à l'état monté est agencé entre 0,80 m et 1,10 m mesurée à partir du plan du plancher.

11. Dispositif d'accès sans barrière (10) selon la revendication 10, **caractérisé en ce que** la hauteur de l'agencement du dispositif d'accès (10) à l'état monté est agencé à 1,05 m mesuré à partir du plan du plancher.

12. Dispositif d'accès sans barrière (10) selon la revendication 10, **caractérisé en ce que** la hauteur de l'agencement du dispositif d'accès (10) à l'état monté est agencé à 0,85 m mesurée à partir du plan du plancher.
